(19) **Europäisches Patentamt / European Patent Office / Office européen des brevets**

(11) **EP 3 930 044 B1**

(12) **EUROPEAN PATENT SPECIFICATION**

(45) Date of publication and mention
of the grant of the patent:
**24.04.2024 Bulletin 2024/17**

(51) International Patent Classification (IPC):
*H01M 4/131* (2010.01)    *H01M 4/36* (2006.01)
*H01M 4/525* (2010.01)    *H01M 4/62* (2006.01)
*H01M 10/0525* (2010.01)

(21) Application number: **20215461.3**

(22) Date of filing: **18.12.2020**

(52) Cooperative Patent Classification (CPC):
**H01M 4/131; H01M 4/366; H01M 4/525;
H01M 4/623;** H01M 10/0525; Y02E 60/10

(54) **POSITIVE ELECTRODE SHEET AND LITHIUM ION BATTERY INCLUDING THE SAME**

POSITIVE ELEKTRODENFOLIE UND LITHIUMIONENBATTERIE DAMIT

FEUILLE D'ÉLECTRODE POSITIVE ET BATTERIE AU LITHIUM-ION LA COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.06.2020 CN 202010575245**

(43) Date of publication of application:
**29.12.2021 Bulletin 2021/52**

(73) Proprietor: **Zhuhai CosMX Battery Co., Ltd.
Zhuhai, Guangdong 519100 (CN)**

(72) Inventors:
• **XU, Xin**
**Zhuhai, Guangdong 519100 (CN)**
• **PENG, Chong**
**Zhuhai, Guangdong 519100 (CN)**
• **LI, Junyi**
**Zhuhai, Guangdong 519100 (CN)**
• **XU, Yanming**
**Zhuhai, Guangdong 519100 (CN)**

(74) Representative: **Elzaburu S.L.P.
Edificio Torre de Cristal
Paseo de la Castellana 259 C, planta 28
28046 Madrid (ES)**

(56) References cited:
**CN-A- 110 224 131    US-A1- 2007 026 316
US-A1- 2019 267 664**

**Description**

**TECHNICAL FIELD**

The present invention relates to the technical field of lithium ion batteries, and in particular, to a positive electrode sheet and a lithium ion battery including the same, the use of the positive electrode sheet may improve growth of an internal resistance of a safe coating layer in a cycle process.

**BACKGROUND**

Lithium ion battery steadily occupies a dominant position in mobile device power supplies with its advantages of high energy density, long cycle life, and high energy conversion efficiency. Our daily life has also been closely linked with the lithium ion battery, however, more and more attention has been paid to the safety of the lithium ion battery due to the continuous simmering of some incidents about mobile phone explosion.

In order to improve safety performance, currently, a conventional method is to coat a safe coating layer on a current collector, the safety performance is improved by coating the safe coating layer to avoid short-circuit failure of a negative electrode membrane and an aluminum foil caused by burrs of the aluminum foil; and a filler may also be added in the safe coating layer, which may play a role of providing energy and balancing safety performance and energy density.

High nickel ternary positive electrode material (a NCM material) has become one of the preferred materials for the filler of the safe coating layer due to its good safety performance and low price. However, with the development and popularization of the lithium ion battery with a higher voltage system, the requirements for safe battery also have been increased. Under the high voltage system, with a structure of the NCM material intensively changes in the cycle process, secondary particles thereof will break in the cycle process, which results in an increased contact area thereof with an electrolyte, more side reactions, more inert layers formed on surfaces of the secondary particles, blockage of charge transfer, and the problems of serious degradation of cycle performance and excessive increase of high-temperature internal resistance of the safe battery.

Patent application US2019/267664A1 discloses an electrode and a lithium-ion battery. The electrode comprises: a current collector; a first active material layer comprising a first active material; and a second active material layer comprising a second active material; wherein the first active material layer is arranged between the current collector and the second active material layer. The first active material layer is formed on at least one surface of the current collector, and a ratio of an average particle size of the second active material to an average particle size of the first active material is from 1:1 to 40:1. The active material layer is used to ensure that the lithium-ion battery does not generate a short circuit when pressed by an external force, thereby ensuring the mechanical safety performance of the lithium-ion battery.

**SUMMARY**

The present invention is defined in the independent claims. In order to improve the deficiencies of the prior art, especially to improve the safe coating layer including the high nickel ternary positive electrode material (a NCM material) of the lithium ion battery, and to solve the problems of serious degradation of cycle performance and excessive increase of high-temperature internal resistance of the safe coating layer including the NCM material, a positive electrode sheet that may significantly improve growth of an internal resistance of the safe coating layer including the NCM material at a higher voltage in the cycle process and a lithium ion battery including the positive electrode sheet are provided in the present invention.

A purpose of the present invention is realized through the following technical solutions:

a positive electrode sheet, comprising a positive electrode current collector, a safe coating layer, and a positive electrode active material layer; the safe coating layer is coated on a surface of the positive electrode current collector, the positive electrode active material layer is coated on a surface of the safe coating layer; wherein the safe coating layer comprises a first positive electrode active material, a first conductive agent, and a first binder; the first positive electrode active material comprises a high nickel ternary positive electrode material and a lithium cobaltate material; a mass ratio of the high nickel ternary positive electrode material to the lithium cobaltate material is 1: (0.25-1); the lithium cobaltate material has a median particle diameter D50 of 3-6 $\mu$m; the high nickel ternary positive electrode material has a median particle diameter D50 of 4-5 $\mu$m; a molecular weight of the first binder is greater than a molecular weight of a second binder in the positive electrode active material layer; the safe coating layer (2) has a thickness of 5-25 $\mu$m.

According to the present invention, a relationship between the molecular weight M1 of the first binder and the molecular weight M2 of the second binder satisfies: $2.5 \times M2 \geq M1 \geq 1.25 \times M2$.

According to the present invention, a mass percentage of each of components in the safe coating layer is: 0.5wt%-3wt% of the first conductive agent, 6wt%-15wt% of the first binder, 82wt%-93wt% of the first positive electrode active material; and a mass ratio of the first binder to the first conductive agent is (1-11):1.

A lithium ion battery including the positive electrode sheet described as above.

According to the present invention, a capacitance retention rate of the lithium ion battery for circularly charging 500 times under a charging system of 0.7C charging /0.5C discharging at 45°C is ≥ 88%.

According to the present invention, a growth rate of an internal resistance of the lithium ion battery for circularly charging 500 times under a charging system of 0.7C charging 10.5C discharging at 45°C is ≤ 100%.

According to the present invention, a pass rate of nail puncturing test of the lithium ion battery is ≥ 80%.

The beneficial effects of the present invention are that:
the problems of degradation of cycle performance and excessive increase of cyclic internal resistance of a safe battery cell are effectively improved by the present invention through coating a safe coating layer and a positive electrode active material layer on a surface of a positive electrode current collector, and controlling composition and mixing ratio of a first positive electrode active material in the safe coating layer on the surface of the positive electrode current collector.

In the present invention, the safe coating layer can effectively prevent the direct contact between burrs of an aluminum foil and a negative electrode membrane to avoid the occurrence of short-circuit discharge between a negative electrode and the aluminum foil and slow down exothermic reaction of a battery during short-circuit. And the provision of discharge capacitance by the positive electrode active material in the safe coating layer, at the same time, the incorporation of a lithium cobaltate material (a LCO material), and the selection of a PVDF binder having a higher molecular weight in the safe coating layer makes the problems of degradation of cycle performance and excessive increase of cyclic internal resistance of the safe battery cell to be further improved.

The purpose of the present invention is realized by controlling the safe coating layer and the positive electrode active material layer coated on the surface of the positive electrode current collector, especially by controlling the selection of the first positive electrode active material in the safe coating layer. Specifically, high-voltage small particles of lithium cobaltate (a LCO material) is used as one of the fillers for the safe coating layer, and the LCO material can provide support for a NCM material in the first positive electrode active material, so that with the use of the safe coating layer, the short-circuit failure between the negative electrode and the aluminum foil caused by the burrs of the aluminum foil may be avoided, the mechanism may be improved and the safety performance may be increased, and at the same time, the problems of cycle capacitance attenuation and excessive increase of high-temperature internal resistance, caused by the breakage of particles of the NCM material, may also be improved while guaranteeing the improvement of safety performance in the above process.

Furthermore, the cycle performance of the battery cell is further optimized by the present invention through controlling a molecular weight of a first binder in the safe coating layer to be greater than a molecular weight of a second binder in the positive electrode active material layer. It is found by studies that when the content of the binder in the safe coating layer is large (for example, same binders are used in the two layers), and in the cycle process, due to the high content of the binder in the safe coating layer, the volume change caused by the swelling of the binder will be greater than that of the positive electrode active material layer, which will easily cause the fracture of an interface between an upper layer and a lower layer, and at the same time, an interface between the safe coating layer and the positive electrode current collector is also easy to be destroyed, which causes the blockage of electronic conduction , thereby resulting in faster cycle capacitance attenuation and sharply increase of internal resistance. However, the control of the ratio of the molecular weight of the binder in the safe coating layer to the molecular weight of the binder in the positive electrode active material layer makes the swelling of the binder in the safe coating layer to be coordinated with the positive electrode active material layer, and avoids the occurrence of the above problems. At the same time, the use of the binder having a larger molecular weight for the safe coating layer, on the one hand, can reduce the amount of the binder, and on the other hand, further contribute to reduce the growth of internal resistance due to the smaller swelling of the binder itself.

## BRIEF DESCRIPTION OF DRAWINGS

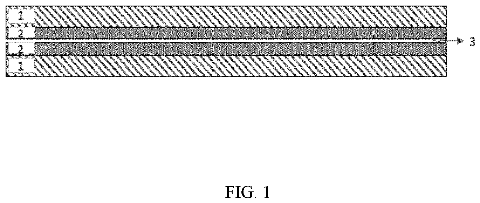

FIG. 1 is a cross-sectional view of a positive electrode sheet.

Where, 1-positive electrode active material layer, 2-safe coating layer, and 3-positive electrode current collector.

## DESCRIPTION OF EMBODIMENTS

As mentioned above, the present invention provides a positive electrode sheet, which includes a positive electrode current collector, a safe coating layer and a positive electrode active material layer; the safe coating layer is coated on a surface of the positive electrode current collector, and the positive electrode active material layer is coated on a surface of the safe coating layer;
where, the safe coating layer includes a first positive electrode active material, a first conductive agent, and a first binder; the first positive electrode active material includes a high nickel ternary positive electrode material and a lithium cobaltate material.

According to the present invention, the lithium cobaltate material has a median particle diameter $D_{50}$ of 3-6 $\mu m$, such as 3-4 $\mu m$.

According to the present invention, the high nickel ternary positive electrode material has a median particle diameter $D_{50}$ of 4-5 $\mu m$.

According to the present invention, a mass ratio of the high nickel ternary positive electrode material to the lithium cobaltate material is 1: (0.25-1), and exemplarily, may be 1:0.25, 1:0.3, 1:0.4, 1:0.5, 1:0.6, 1:0.7, 1:0.8, 1:0.9, 1:1.

According to the present invention, a chemical formula of the high nickel ternary positive electrode material is $LiNi_xCo_yMn_{(1-x-y)}O_2$, 1>x>0, 1>y>0, 1>1-x-y>0, a NCM material for short.

Preferably, 1>x≥0.5, that is, a content of nickel in the high nickel ternary positive electrode material is ≥50%.

Exemplarily, a chemical formula of the high nickel ternary positive electrode material is $Li_{1+x}(Ni_{0.5}Co_{0.2}Mn_{0.3})_{1-x}O_2$, 1>1-x>0, referred to as NCM 523.

Exemplarily, a chemical formula of the high nickel ternary positive electrode material is $Li_{1+x}(Ni_{0.6}Co_{0.2}Mn_{0.2})_{1-x}O_2$, 1>1-x>0, referred to as NCM 622.

Exemplarily, a chemical formula of the high nickel ternary positive electrode material is $Li_{1+x}(Ni_{0.8}Co_{0.1}Mn_{0.1})_{1-x}O_2$, 1>1-x>0, referred to as NCM811.

According to the present invention, a chemical formula of the lithium cobaltate material is $LiCoO_2$, LCO for short.

According to the present invention, the positive electrode active material layer includes a second positive electrode active material, a second conductive agent, and a second binder.

According to the present invention, the second positive electrode active material is selected from one of lithium cobaltate, lithium manganate, lithium nickelate, lithium nickel cobalt manganate, lithium iron phosphate, lithium iron manganese phosphate, lithium vanadium phosphate, Lithium vanadium-oxide phosphate, a rich-lithium-manganese-based material, lithium nickel cobalt aluminate, and lithium titanate, and a combination thereof.

According to the present invention, the first binder and the second binder are selected from polyvinylidene fluoride.

According to the present invention, the first conductive agent and the second conductive agent are the same or different, and are each independently selected from a combination of one or more of conductive carbon black, carbon fiber, carbon nanotube, graphite, graphene, metal powder, a composite conductive material, conductive ceramic powder.

According to the present invention, the molecular weight of the first binder is greater than the molecular weight of the second binder. Exemplarily, a relationship between the molecular weight M1 of the first binder and the molecular weight M2 of the second binder satisfies: $2.5 \times M2 \geq M1 \geq 1.25 \times M2$.

Specifically, the molecular weight of the first binder PVDF in the safe coating layer is greater than the molecular weight of the second binder PVDF in the positive electrode active material layer. Exemplarily, the relationship between the molecular weight M3 of the polyvinylidene fluoride of the first binder and the molecular weight M4 of the polyvinylidene fluoride of the second binder satisfies: $2.5 \times M4 \geq M3 \geq 1.25 \times M4$.

According to the present invention, a mass percentage of each of components in the safe coating layer is: 0.5wt%-3wt% of the first conductive agent, 6wt%-15wt% of the first binder, 82wt%-93wt% of the first positive electrode active material; and a mass ratio of the first binder to the first conductive agent is (1-11):1.

According to the present invention, the safe coating layer has a thickness of 5-25 $\mu m$, such as 9-18 $\mu m$, such as 15 $\mu m$.

Exemplarily, the mass ratio of the first binder to the first conductive agent is 1: 1, 2: 1, 3: 1, 4: 1, 5: 1, 6: 1, 7: 1, 8:1, 9:1, 10:1, or 11:1.

Exemplarily, the first conductive agent has a mass percentage of 0.5wt%, 1.0wt%, 1.5wt%, 2wt%, 3wt%, the first binder has a mass percentage of 6wt%, 7wt%, 8wt%, 9wt%, 10wt%, 11wt%, 12wt%, 13wt%, 14wt%, 15wt%, the first positive electrode active material has a mass percentage of 82wt%, 83wt%, 84wt%, 85wt%, 86wt%, 87wt%, 88wt%, 89wt%, 90wt%, 91wt%, 92wt%, 93wt%.

According to the present invention, a mass percentage of each of components in the positive electrode active material layer is:

1wt%-6wt% of the second conductive agent, 0.5wt%-4wt% of the second binder, and 90wt%-98wt% of the second positive electrode active material.

According to the present invention, the positive electrode active material layer has a thickness of 35-60 $\mu m$, such as 40-50 $\mu m$, such as 45 $\mu m$.

Exemplarily, the second conductive agent has a mass percentage of 1.0wt%, 1.5wt%, 2wt%, 3wt%, 4wt%, 5wt%, 6wt%, the second binder has a mass percentage of 1wt%, 1.5wt%, 2wt%, 3wt%, 4wt%, and the second positive electrode active material has a mass percentage of 98wt%, 97wt%, 96wt%, 94wt%, 92wt%, 90wt%.

According to the present invention, the positive electrode current collector is selected from aluminum foil.

The present invention also provides a lithium ion battery, which inclues the positive electrode sheet described as above.

According to the present invention, the lithium ion battery further comprises a negative electrode sheet, an electrolyte and a separator.

According to the present invention, a capacitance retention rate of the lithium ion battery for circularly charging 500 times under a charging system of 0.7C charging 10.5C discharging at 45°C is ≥ 88%.

According to the present invention, a growth rate of an internal resistance of the lithium ion battery for circularly charging 500 times under a charging system of 0.7C charging 10.5C discharging at 45°C is ≤ 100%.

The present invention also provides a method for preparing the positive electrode sheet described as above, the method includes the following steps:

preparing a slurry of a safe coating layer and a slurry of a positive electrode active material layer respectively, where the safe coating layer includes a first positive electrode active material, a first conductive agent, and a first binder; the first positive electrode active material is selected from a high nickel ternary positive electrode material and a lithium cobaltate material;

coating the slurry of the safe coating layer and the slurry of the positive electrode active material layer together on a positive electrode current collector by a coating device, drying, cutting, and slicing to obtain a positive electrode sheet.

According to the present invention, the method specifically includes the following steps:

(1-1) mixing a first positive electrode active material, a first conductive agent and a first binder, and then adding N-methyl pyrrolidinone and stirring to obtain a slurry of a safe coating layer; the first positive electrode active material is selected from a high nickel ternary positive electrode material and a lithium cobaltate material;

(1-2) mixing a second positive electrode active material, a second conductive agent, and a second binder, and then adding N-methyl pyrrolidinone and stirring to obtain a slurry of a positive electrode active material layer;

(1-3) coating the slurry of the safe coating layer and the slurry of the positive electrode active material layer successively on a positive electrode current collector by a coating device, drying, cutting, slicing to obtain a positive electrode sheet.

The present invention also provides a method for preparing the lithium ion battery described as above, the method includes:

(1) preparing a positive electrode sheet according to the above-mentioned preparation method of the positive electrode sheet;

(2) assembling the positive electrode sheet and a negative electrode sheet to obtain a lithium ion battery.

According to the present invention, the step (2) specifically comprises:

(2-1) mixing a negative electrode active material, a conductive agent, a binder and a thickener, adding deionized water and stirring to obtain a slurry of a negative electrode; then coating the slurry of the negative electrode on a negative electrode current collector, drying, cutting, slicing to obtain a negative electrode sheet;

(2-2) making the positive electrode sheet obtained in step (1) and the negative electrode sheet obtained in step (2-1) together with a separator and an aluminum plastic film into a battery, and then subjecting the battery to procedures such as liquid injection, aging, formation, pre-circulation and etc., to obtain a lithium ion battery.

Hereinafter, the present invention will be further described in detail with reference to specific embodiments. It should be understood that the following embodiments are only exemplary description and explanation of the present invention, and should not be construed as limitation of the protection scope of the present invention. All technologies implemented based on the above contents of the present invention are covered within the scope of the present invention.

The experimental methods used in the following embodiments are conventional methods unless otherwise specified; the reagents and materials used in the following embodiments, unless otherwise specified, can be obtained from commercial sources.

In the description of the present invention, it should be noted that the terms "first", "second", etc. are merely used for descriptive purposes, and do not indicate or imply relative importance.

The molecular weight of polyvinylidene fluoride used in the following embodiments is a weight average molecular weight, measured by gel permeation chromatography (GPC).

Example 1

(1) Mixing a positive electrode active material (80wt% NCM523+20wt% LCO): polyvinylidene fluoride (with a molecular weight of between 1 million and 1.1 million, recorded as 1 million): conductive carbon black in a mass ratio of 90:8.8:1.2 , adding the mixture into N-Methyl pyrrolidone, evenly stirring by using a ball mill at a high speed, coating on an aluminum foil with a thickness of 10μm by using a coating device, and drying to remove the N-Methyl pyrrolidone, so as to obtain a lithium ion battery current collector having a safe coating layer, an aluminum foil, and another safe coating layer shown in FIG. 1. The thickness of a single-layer of the safe coating layer is about 15μm. (2) The lithium ion battery current collector with the safe coating layers described as above is coated with a slurry of a positive electrode on upper and lower surfaces, where the composition of the slurry of the positive electrode is 97.5 wt% of lithium cobaltate (LCO), 1.1 wt% of polyvinylidene fluoride ( with a molecular weight of between 800,000-900,000, recorded as 800,000) and 1.4wt% of conductive carbon black, and dried, rolled and cut into 65mm×1000mm positive electrode sheets, and then a prepared positive electrode sheet and a conventional negative electrode sheet, a separator and an electrolyte are made into a square soft-packed battery according to a conventional lithium battery manufacturing process, and the capacitance of the battery is about 4100mAh.

Example 2

Others are the same as in Example 1, the difference is that a mass ratio of NCM523 to LCO in the step (1) is 50wt% NCM523+50wt% LCO.

Example 3

Others are the same as in Example 2, the difference is that the molecular weight of polyvinylidene fluoride in the step (1) is between 1.9-2.1 million, which is recorded as 2 million.

Example 4

Others are the same as in Example 2, the difference is that in the step (1) (50wt% NCM523+50wt% LCO): polyvinylidene fluoride: conductive carbon black are mixed in a mass ratio of 93.5:5:1.5.

Example 5

Others are the same as in Example 2, the difference is that in the step (1) (50wt% NCM523+50wt% LCO): polyvinylidene fluoride: conductive carbon black are mixed in a mass ratio of 90.5:8:1.5.

Comparative Example 1

Others are the same as in Embodiment 2, the difference is that the molecular weight of polyvinylidene fluoride in the step (1) is between 800,000 and 900,000, which is recorded as 800,000.

Comparative Example 2

Others are the same as in Example 2, the difference is that the molecular weight of polyvinylidene fluoride in the step (1) is between 800,000 and 900,000, which is recorded as 800,000, and (50wt% NCM523+50wt% LCO): polyvinylidene fluoride: conductive carbon black are mixed in a mass ratio of 94:4.5:1.5.

Comparative Example 3

Others are the same as in Example 2, the difference is that the mass ratio of NCM523 to LCO in step (1) is 100wt% NCM523+0wt% LCO.

Comparative Example 4

Others are the same as in Example 2, the difference is that the mass ratio of NCM523 to LCO in step (1) is 0wt% NCM523+100wt% LCO.

Comparative Example 5

Others are the same as in Example 2, the difference is that the mass ratio of NCM523 to LCO in step (1) is 20wt% NCM523+80wt% LCO.

Comparative Example 6

Others are the same as Embodiment 2, the difference is that the step (1) is not included, that is, no safe coating layer is on the surfaces of the positive electrode current collector.

Comparative Example 7

Others are the same as in Example 2, the difference is that the molecular weight of polyvinylidene fluoride in the step (1) is between 2.5-2.6 million, which is recorded as 2.5 million, (50wt% NCM523+50wt% LCO): polyvinylidene fluoride: conductive carbon black are mixed in a mass ratio of 94:4.5:1.5.

Comparative Example 8

Others are the same as in Example 2, except that the molecular weight of polyvinylidene fluoride in the step (1) is between 2.5 and 2.6 million, which is recorded as 2.5 million.

Measurement results of respective Examples and Comparative Examples are shown in the following table:

| | Filler of safe coating layer | Molecular weight of PVDF in safe coating layer and active layer | Mass ratio of binder to conductive agent in safe coating layer | Pass rate of nail puncturing test | Capacitance retention rate for SOOT-cycle at high temperature | 500T-internal resistance growth rate |
|---|---|---|---|---|---|---|
| Embodiment 1 | 80wt%NCM523+20wt% LCO | 1 million /0.8million | 7.3 | 15/15 | 88.07% | 96.01% |
| Embodiment 2 | 50wt%NCM523+50wt% LCO | 1 million /0.8million | 7.3 | 14/15 | 89.58% | 81.11% |
| Embodiment 3 | 50wt%NCM523+50wt% LCO | 2 million /0.8million | 7.3 | 15/15 | 90.66% | 75.55% |
| Embodiment 4 | 50wt%NCM523+50wt% LCO | 1 million /0.8million | 3.3 | 12/15 | 91.25% | 53.06% |
| Embodiment 5 | 50wt%NCM523+50wt% LCO | 1 million /0.8million | 5.3 | 13/15 | 90.91% | 79.08% |
| Comparative Embodiment 1 | 50wt%NCM523+50wt% LCO | 0.8 million /0.8million | 7.3 | 13/15 | 77.17% | 139.47% |
| Comparative Embodiment 2 | 50wt%NCM523+50wt% LCO | 0.8 million/ 0.8million | 3 | 7/15 | 88.75% | 97.63% |
| Comparative Embodiment 3 | 100wt%NCM523+0wt% LCO | 1 million /0.8million | 7.3 | 15/15 | 82.65% | 111.45% |
| Comparative Embodiment 4 | 0wt%NCM523+100wt% LCO | 1 million /0.8million | 7.3 | 8/15 | 91.54% | 37.59% |
| Comparative Embodiment 5 | 20wt%NCM523+80wt% LCO | 1 million /0.8million | 7.3 | 10/15 | 90.57% | 48.96% |
| Comparative Embodiment 6 | / | / | / | 0/15 | 92.14% | 29.61% |

(continued)

|  | Filler of safe coating layer | Molecular weight of PVDF in safe coating layer and active layer | Mass ratio of binder to conductive agent in safe coating layer | Pass rate of nail puncturing test | Capacitance retention rate for SOOT-cycle at high temperature | 500T-internal resistance growth rate |
|---|---|---|---|---|---|---|
| Comparative Embodiment 7 | 50wt%NCM523+50wt% LCO | 2.5 million /0.8million | 3 | 8/15 | 90.11% | 45.05% |
| Comparative Embodiment 8 | 50wt%NCM523+50wt% LCO | 2.5 million /0.8million | 7.3 | 15/15 | 68.73% | 143.75% |

Performance test: a prepared lithium ion battery is subjected to 4.2V puncturing and energy density test. The test methods are as follows:

1) Nail puncturing test method:
a lithium ion battery is placed in a normal temperature environment, charged with a constant current of 0.5C to a voltage of 4.2V, and then charged with a constant voltage until the current is 0.025C. The lithium ion battery is transferred to a nail puncturing test equipment, where a test environment temperature is maintained at 25°C, the lithium ion battery is passed through on a lug side of a negative electrode, 7mmm away from a side of a battery cell, by a steel nail having a diameter of 4mm at a constant speed of 30mm/s, the steel nail is kept for 300s, and it is recorded as passing if the lithium ion battery does not catch fire and does not explode. 15 lithium ion batteries are tested in each of the examples, and the pass rate of nail puncturing test is used as an index to evaluate the safety of lithium ion batteries, and the safety is relatively excellent if the pass rate of the test is ≥80%.

2) Test method of the growth of internal resistance for cycles at high temperature:
A lithium ion battery is placed in a high temperature of 45°C, and is cycled with 0.7C charging/0.5C discharging, a cut-off current is 0.05C, and direct current resistance, DCR is tested once every 50T-cycle (charging to 3.6V, then charging at a constant voltage, a cut-off current is 0.05C; discharging at 100mA for 10s, discharging at 2000mA for 1s), a direct current internal resistance is (V1-V2)/ (I2-I1)).

$$\text{Growth rate of internal resistance} = \text{current DCR/initial DCR} * 100\%.$$

The following conclusions can be obtained from the above table:

1) it can be known from Comparative Examples 3-4 and Comparative Example 6 that the safe coating layer can improve the safety performance of the battery cell. Where, the safety performance of the battery having the safe coating layer with a LCO filler is filed is slightly worse than that with a NCM filler, but the cycle capacitance retention is better, and the growth of internal resistance for cycles at high temperature is small.
2) it can be known from Examples 1-2 and Comparative Examples 3-6 that the safe coating layer can improve the safety performance of the battery cell, and as the increase of the ratio that LCO is mixed, the safety performance deteriorates, the cycle performance improves, and the growth rate of internal resistance significantly improves. Where, the battery with pure NCM is base coated has the best safety performance and the worst cycle performance.
3) it can be known from Comparative Examples 1-2 and 6 that when the molecular weight of PVDF in the safe coating layer is less than 1.25 times of the molecular weight of PVDF of the active material layer, increasing the content of PVDF will improve the safety performance of the battery to a certain extent compared with the battery with no safe coating layer, but the cycle performance will deteriorate much more, and the growth rate of internal resistance is very big; reducing the content of PVDF in the safe coating layer can reduce the growth rate of internal resistance and improve the cycle performance, but the improvement of the safety performance is limited and cannot meet requirements.
4) it can be seen known Examples 2-3 and Comparative Example 6 that when 2.5 times of the molecular weight of PVDF in the active material layer > the molecular weight of PVDF in the safe coating layer > 1.25 times of the molecular weight of PVDF in the active material layer, the safety and cycle performances of the battery are better, and the higher the molecular weight of PVDF in the safe coating layer, the better the safety, while the cycle performance is slightly affected.

5) it can be known from Comparative Examples 6-8 that when the molecular weight of PVDF in the safe coating layer > 2.5 times of the molecular weight of PVDF in the active material layer, the cycle performance of the battery will be seriously deteriorated. At the same time, the cycle performance can be improved when the content of PVDF is further reduced, but the safety performance of the battery cannot meet the requirement of 80%.

6) it can be known from Examples 2, and 4-5 that as the mass ratio of the first binder to the first conductive agent in the safe coating layer increases, the safety performance of the battery is better, and correspondingly the cycle capacitance retention and the growth of internal resistance are slightly worse.

The embodiments of the present invention have been described above. However, the present invention is not limited to the above embodiments. The scope of protection is defined by the appended claims.

## Claims

1. A positive electrode sheet, comprising a positive electrode current collector (3), a safe coating layer (2), and a positive electrode active material layer (1); the safe coating layer (2) is coated on a surface of the positive electrode current collector (3), the positive electrode active material layer (1) is coated on a surface of the safe coating layer (2);

   wherein the safe coating layer (2) comprises a first positive electrode active material, a first conductive agent, and a first binder; the first positive electrode active material comprises a high nickel ternary positive electrode material and a lithium cobaltate material;
   a mass ratio of the high nickel ternary positive electrode material to the lithium cobaltate material is 1: (0.25-1);
   the lithium cobaltate material has a median particle diameter $D_{50}$ of 3-6 $\mu$m;
   the high nickel ternary positive electrode material has a median particle diameter $D_{50}$ of 4-5 $\mu$m;
   a molecular weight of the first binder is greater than a molecular weight of a second binder in the positive electrode active material layer;
   the safe coating layer (2) has a thickness of 5-25 $\mu$m.

2. The positive electrode sheet according to claim 1, wherein a relationship between the molecular weight M1 of the first binder and the molecular weight M2 of the second binder satisfies: $2.5 \times M2 \geq M1 \geq 1.25 \times M2$.

3. The positive electrode sheet according to claim 1 or 2, wherein a mass percentage of each of components in the safe coating layer is:
   0.5wt%-3wt% of the first conductive agent, 6wt%-15wt% of the first binder, 82wt%-93wt% of the first positive electrode active material; and a mass ratio of the first binder to the first conductive agent is (1-11): 1.

4. A lithium ion battery comprising the positive electrode sheet according to any one of claims 1 to 3.

5. The lithium ion battery according to claim 4, wherein a capacitance retention rate of the lithium ion battery for circularly charging 500 times under a charging system of 0.7C charging 10.5C discharging at 45°C is $\geq$ 88%; and/ or,

   a growth rate of an internal resistance of the lithium ion battery for circularly charging 500 times under a charging system of 0.7C charging 10.5C discharging at 45°C is $\leq$ 100%; and/or,
   a pass rate of nail puncturing test of the lithium ion battery is $\geq$ 80%.

## Patentansprüche

1. Positives Elektrodenblatt, umfassend einen positiven Elektroden-Stromkollektor (3), eine sichere Überzugsschicht (2) und eine positive Elektroden-Aktivmaterialschicht (1); wobei die sichere Überzugsschicht (2) auf eine Oberfläche des positiven Elektroden-Stromkollektors (3) aufgetragen ist, die positive Elektroden-Aktivmaterialschicht (1) auf eine Oberfläche der sicheren Überzugsschicht (2) aufgetragen ist;

   wobei die sichere Überzugsschicht (2) ein erstes aktives Material für eine positive Elektrode, ein erstes leitfähiges Mittel und ein erstes Bindemittel umfasst; wobei das erste aktive Material für die positive Elektrode ein ternäres positives Elektrodenmaterial mit hohem Nickelgehalt und ein Lithiumkobaltatmaterial umfasst;

das Massenverhältnis des ternären positiven Elektrodenmaterials mit hohem Nickelgehalt zum Lithiumkobaltatmaterial beträgt 1: (0,25-1);

das Lithiumkobaltatmaterial hat einen mittleren Teilchendurchmesser $D_{50}$ von 3 - 6 $\mu$m;

das ternäre positive Elektrodenmaterial mit hohem Nickelgehalt hat einen mittleren Teilchendurchmesser $D_{50}$ von 4 - 5 $\mu$m;

ein Molekulargewicht des ersten Bindemittels ist größer als ein Molekulargewicht eines zweiten Bindemittels in der aktiven Materialschicht der positiven Elektrode;

die sichere Überzugsschicht (2) hat eine Dicke von 5-25 pm.

2. Blatt mit positiver Elektrode nach Anspruch 1, wobei eine Beziehung zwischen dem Molekulargewicht MI des ersten Bindemittels und dem Molekulargewicht M2 des zweiten Bindemittels erfüllt ist: $2,5 \times M2 \geq M1 \geq 1,25 \times M2$.

3. Positives Elektrodenblatt nach Anspruch 1 oder 2, wobei der Massenprozentsatz jeder der Komponenten in der sicheren Überzugsschicht wie folgt ist:

0,5 Gew.-% - 3 Gew.-% des ersten leitfähigen Mittels, 6 Gew.-% - 15 Gew.-% des ersten Bindemittels, 82 Gew.-% - 93 Gew.-% des ersten aktiven Materials für die positive Elektrode; und ein Massenverhältnis des ersten Bindemittels zu dem ersten leitfähigen Mittel ist (I-II):I.

4. Lithium-Ionen-Batterie mit dem positiven Elektrodenblatt nach einem der Ansprüche 1 bis 3.

5. Lithium-Ionen-Batterie nach Anspruch 4, wobei die Kapazitätserhaltungsrate der Lithium-Ionen-Batterie bei 500-maligem zirkulärem Laden unter einem Ladesystem von 0,7C Laden / 0,5C Entladen bei 45 °C $\geq$ 88 % ist; und/oder,

eine Wachstumsrate eines Innenwiderstands der Lithium-Ionen-Batterie bei 500-maligem zirkulärem Laden unter einem Ladesystem von 0,7C Laden / 0,5C Entladen bei 45 °C $\leq$ 100 % ist; und/oder, die Bestehensquote des Nageldurchstoßtests der Lithium-Ionen-Batterie $\geq$ 80 % beträgt.

## Revendications

1. une feuille d'électrode positive, comprenant un collecteur de courant d'électrode positive (3), une couche de revêtement sûre (2) et une couche de matériau actif d'électrode positive (1) ; la couche de revêtement sûre (2) est revêtue sur une surface du collecteur de courant d'électrode positive (3), la couche de matériau actif d'électrode positive (1) est revêtue sur une surface de la couche de revêtement sûre (2) ;

dans laquelle la couche de revêtement sûre (2) comprend un premier matériau actif d'électrode positive, un premier agent conducteur et un premier liant ; le premier matériau actif d'électrode positive comprend un matériau d'électrode positive ternaire à haute teneur en nickel et un matériau à base d'oxyde mixte de cobalt et lithium ;

le rapport de masse entre le matériau d'électrode positive ternaire à haute teneur en nickel et le matériau d'oxyde mixte de cobalt et lithium est de 1 : (0,25-1) ;

le matériau d'oxyde mixte de cobalt et lithium a un diamètre médian de particule $D_{50}$ de 3-6 $\mu$m ;

le matériau d'électrode positive ternaire à haute teneur en nickel a un diamètre médian de particule $D_{50}$ de 4-5 $\mu$m ;

le poids moléculaire du premier liant est supérieur au poids moléculaire d'un second liant dans la couche de matériau actif de l'électrode positive ;

la couche de revêtement sûre (2) a une épaisseur de 5-25 $\mu$m.

2. Feuille d'électrode positive selon la revendication 1, dans laquelle une relation entre le poids moléculaire MI du premier liant et le poids moléculaire M2 du second liant répond à : $2,5 \times M2 \geq M1 >\_1,25 \times M2$.

3. Feuille d'électrode positive selon la revendication 1 ou 2, dans laquelle un pourcentage de masse de chacun des composants dans la couche de revêtement sûre est :

de 0,5 à 3 % en poids du premier agent conducteur, de 6 à 15 % en poids du premier liant, de 82 à 93 % en poids de la première matière active d'électrode positive ; et un rapport de masse du premier liant au premier agent conducteur est de (I-II):I.

4. Batterie au lithium-ion comprenant la feuille d'électrode positive selon l'une des revendications 1 à 3.

5. La batterie au lithium-ion selon la revendication 4, dans laquelle un taux de rétention de capacité de la batterie au lithium-ion pour une charge circulaire 500 fois sous un système de charge de 0,7C de charge/0,5C de décharge à 45 °C est $\geq$ 88% ; et/ou,

un taux de croissance d'une résistance interne de la batterie au lithium-ion pour une charge circulaire 500 fois sous un système de charge de 0,7C de charge/0,5C de décharge à 45 °C est $\leq$ 100% ; et/ou, le taux de réussite de l'essai de perforation des clous de la batterie au lithium-ion est $\geq$ 80 %.

FIG. 1

**REFERENCES CITED IN THE DESCRIPTION**

**Patent documents cited in the description**

- US 2019267664 A1